# EUROPÄISCHE PATENTSCHRIFT

(11) **EP 0 583 538 B1**
(45) Veröffentlichungstag und Bekanntmachung des Hinweises auf die Patenterteilung: **16.10.1996**
(21) Anmeldenummer: 93102720.5
(22) Anmeldetag: 20.02.1993
(51) Int. Cl.: H01H 3/16, B29C 45/26

(54) **Stösselschalter, insbesondere Bremslichtschalter, mit einer Schalterjustierung und Verfahren zum einstückigen Herstellen des Schlittens für einen solchen Stösselschalter**
Tappet switch, particularly stop light switch, with switch adjustage and method of integral production of the slide block for such a tappet switch
Interrupteur à poussoir, en particulier contacteur de stop, avec ajustage de l'interrupteur et méthode de fabrication intégrale du coulisseau d'un tel interrupteur à poussoir

(30) Priorität: 12.05.1992 DE 4215515
(43) Veröffentlichungstag der Anmeldung: 23.02.1994
(73) Patentinhaber: Merit-Elektrik GmbH, D-51643 Gummersbach (DE)
(72) Erfinder: Micallef, Pierre, St. Julians STJ07 (MT)
(74) Vertreter: Schwarz, Klaus-Jürgen, Dipl.-Ing.

(56) Entgegenhaltungen:
- DE-A- 3 439 695
- DE-C- 2 848 875
- DE-U- 7 915 281
- FR-A- 2 532 105

## Beschreibung

Die Erfindung betrifft einen Stößelschalter, insbesondere Bremslichtschalter, mit einer Schalterjustierung nach dem Oberbegriff des Anspruches 1 und bezieht sich ferner auf ein Verfahren zum einstückigen Herstellen des Schlittens für einen solchen Stößelschalter aus Kunststoff mit einem Spritzwerkzeug.

Bei einem derartigen bekannten Stößelschalter (DE 28 48 875 C2) weist der im Querschnitt oval ausgebildete Stößel an den beiden Schmalseiten jeweils eine Klinkenverzahnung auf. Diese Klinkenverzahnungen arbeiten jeweils mit einem Gegenzahn im Schlitten als Rastelement zusammen. Hierbei besteht jedoch die Gefahr, daß die einander gegenüberliegenden beiden Gegenzähne am Schlitten bei mehrfacher Nachjustierung des Stößelschalters vorzeitig verschleißen und dadurch die Funktionsfähigkeit des Klinkengesperres nicht mehr ausreichend sichergestellt ist.

Der Erfindung liegt die Aufgabe zugrunde, an einem Stößelschalter nach dem Oberbegriff des Anspruches 1, der insbesondere als Bremslichtschalter für Kraftfahrzeuge geeignet ist, das Gesperre zwischen Stößel und Schlitten mit einfachen technischen Mitteln ohne zusätzliche Bauteile so zu verbessern, daß auch bei einer häufigeren Nachjustierung des Stößelschalters auf jeden Fall die Funktionsfähigkeit des Gesperres über die gesamte Lebensdauer des Schalters ausreichend sichergestellt ist.

Diese Aufgabe wird gemäß der Erfindung bei einem Stößelschalter nach dem Oberbegriff des Anspruches 1 dadurch gelöst, daß die Gegenverzahnungen am Schlitten ebenso wie die Verzahnungen am Stößel als Mehrfachverzahnungen ausgebildet und an der Innenseite von zwei sich beiderseits der Verzahnungen des Stößels gegenüberliegenden, im Querschnitt als Viertelschalen geformten Führungsmulden angeordnet sind, die sich zwischen endseitigen Stirnwänden des Schlittens parallel zueinander erstrecken.

Besonders vorteilhafte Weiterbildungen des Gegenstandes der Erfindung sind in den Ansprüchen 2 bis 4 gekennzeichnet, während sich die Ansprüche 5 und 6 auf ein besonders vorteilhaftes Verfahren zum einstückigen Herstellen des Schlittens für den Stößel an einem solchen Stößelschalter aus Kunststoff mit einem Spritzwerkzeug beziehen.

Dadurch, daß die Gegenverzahnungen am Schlitten ebenso wie die Verzahnungen am Stößel als Mehrfachverzahnungen ausgebildet und an der Innenseite von zwei sich beiderseits der Verzahnungen des Stößels gegenüberliegenden, im Querschnitt als Viertelschalen geformten Führungsmulden angeordnet sind, die sich zwischen endseitigen Stirnwänden des Schlittens parallel zueinander erstrecken, ergibt sich einerseits die Möglichkeit, die Wirkungsweise und die Funktionssicherheit der zwischen dem Stößel und dem Schlitten vorhandenen Kupplungsverbindung wesentlich zu verbessern. Hinzu kommt der weitere Vorteil, daß die Gegenverzahnung im Schlitten ein einstückig integriertes Bestandteil der Stößelführung ist, wobei die Stößelführung des Schlittens den Stößel selbst nur teilweise umschließt, was den weiteren Vorteil hat, daß der Schlitten mit den Gegenverzahnungen durch das in den Ansprüchen 5 und 6 gekennzeichnete Verfahren mit einem zweiteiligen Spritzwerkzeug in einfachster Produktionsweise aus Kunststoff hergestellt werden kann.

Eine in beiden Beanspruchungsrichtungen gleichermaßen einwandfreie Justierung ergibt sich bei einem solchen Stößelschalter, wenn die Verzahnungen am Stößel und die Gegenverzahnungen am Schlitten an beiden Zahnflanken jeweils mit gleichem Steigungswinkel ausgebildet sind.

Außerdem kann die Justiereinrichtung ohne Beeinträchtigung der Stabilität und Dauerhaftigkeit besonders materialsparend hergestellt werden, wenn die die Gegenverzahnungen aufweisenden Führungsmulden über mehrere Querstege an dazu parallelen Längsseitenwandteilen des Schlittens unter Bildung von Hohlprofilwandungen nur stellenweise abgestützt sind.

Besonders vorteilhaft ist es ferner, daß die Führungsmulden beiderseits einer durch den Schlitten und den Stößelquerschnitt senkrecht verlaufenden Längsmittelebene einander diagonal gegenüberliegen und ihre zu der Längsmittelebene parallelen Längskanten in einer gegenüber der Längsmittelebene um einen Winkel von 90° gedrehten horizontalen Mittelebene in einem parallelen Abstand voneinander angeordnet sind.

Das erfindungsgemäße Verfahren zum einstückigen Herstellen des Schlittens für einen Stößelschalter nach den Ansprüchen 1 und 4 aus Kunststoff mit einem Spritzwerkzeug ist dadurch gekennzeichnet, daß die Herstellung des Schlittens durch ein zweiteiliges Spritzwerkzeug erfolgt, dessen beide Formhälften in der senkrechten Längsmittelebene des Schlittens aneinanderstoßen und so geformt sind, daß das formgebende Werkzeugteil für eine neben der senkrechten Längsmittelebene an der oberen Führungsmulde ausgebildete erste Gegenverzahnung Bestandteil der gegenüberliegenden ersten Formhälfte und das formgebende Werkzeugteil für die neben der senkrechten Längsmittelebene an der unteren Führungsmulde ausgebildete zweite Gegenverzahnung Bestandteil der gegenüberliegenden zweiten Formhälfte ist.

Dies ist insofern besonders vorteilhaft, als sich ein Innenprofil an einer Innenbohrung, wie zum Beispiel die Gegenverzahnung für den Stößel an dem Schlitten, bei dem geringen Querschnitt des Stößels und dem entsprechend kleinen Innendurchmesser der Gegenverzahnung an dem Schlitten normalerweise nicht ohne weiteres herstellen läßt. Bei einem größeren Durchmesser der Innenbohrung bzw. bei einem größeren Abstand zwischen den Gegenverzahnungen am Schlitten wäre es zwar möglich, die Gegenverzahnungen durch kollabierende Kerne an dem Spritzwerkzeug relativ einfach herzustellen, doch ist diese Technik bei kleinen Innendurchmessern nicht anwendbar.

Von besonderem Vorteil für die Herstellung des Schlittens ist es weiterhin, daß die beiden Formhälften des Spritzwerkzeuges zum einstückigen Herstellen des Schlittens so ausgebildet sind, daß von jeder der beiden Formhälften über die senkrechte Trennebene zwischen den Formhälften seitlich hervorstehende Formstege an in der horizontalen Mittelebene zwischen den beiden Formhälften verlaufenden Gleitflächen aneinanderliegen und bei geschlossenem Spritzwerkzeug in jeweils gegenüberliegende längsseitige Formmulden an der zugehörigen anderen Formhälfte eingreifen, wobei die Formmulden und die Formstege an den beiden Formhälften so ausgeformt sind, daß sie bei geschlossenem Spritzwerkzeug jeweils eine für die Ausbildung der Führungsmulden mit den Gegenverzahnungen an dem Schlitten geeignete Einspritzkammer zwischen sich freilassen.

Durch die Erfindung ergibt sich daher der besondere Vorteil, daß die Gegenverzahnungen an dem Schlitten auch ohne kollabierende Kerne allein durch die erfindungsgemäße Ausbildung des Schlittens mit einem Spritzwerkzeug einfacher Bauart hergestellt werden können.

Ein bevorzugtes Ausführungsbeispiel der Erfindung ist in der Zeichnung schematisch dargestellt. Es zeigen
- Fig. 1: eine Seitenansicht eines Gesperres Zwischen einem justierbaren Stößel und einem Schlitten für einen Bremslichtschalter gemäß Fig. 5,
- Fig. 2: einen senkrechten Schnitt durch das Gesperre gemäß Schnittlinie II - II von Fig. 1,
- Fig. 3: einen weiteren Schnitt durch das Gesperre gemäß Schnittlinie III - III von Fig. 1,
- Fig. 4: einen Längsschnitt durch das Gesperre von Fig. 1 bis 3 gemäß Schnittlinie IV - IV von Fig. 2, wobei der Stößel nicht geschnitten wurde,
- Fig. 5: einen rein schematischen Schnitt durch einen Bremslichtschalter mit einem Gesperre zwischen Stößel und Schlitten gemäß Fig. 1 bis 4,
- Fig. 6: einen Schnitt durch ein zweiteiliges Spritzwerkzeug zum Herstellen des Schlittens mit der Gesperreanordnung von Fig. 1 bis 4 bei geschlossenen Werkzeughälften,
- Fig. 7: einen Schnitt durch das Spritzwerkzeug mit einem darin ausgeformten Schlitten bei geöffneten Werkzeughälften und
- Fig. 8: einen Längsschnitt durch den Schlitten gemäß Schnittlinie VIII - VIII von Fig. 7.

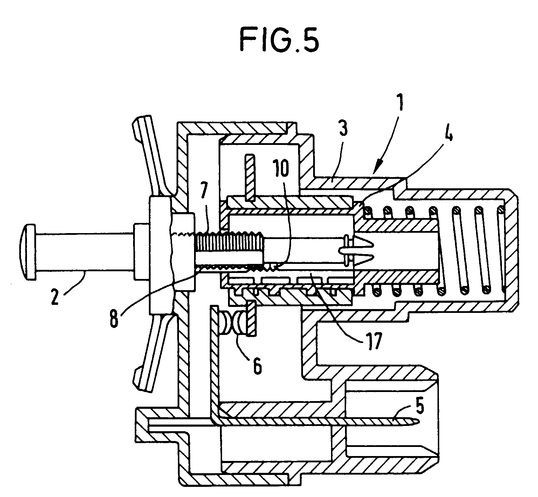

Der in Fig. 5 rein schematisch dargestellte Stößelschalter 1 hat einen Stößel 2 aus Kunststoff, der im Querschnitt in beliebiger geometrischer Form rund, oval, mehreckig oder ähnlich ausgebildet sein kann. Der Stößel 2 ist innerhalb eines ebenfalls aus Kunststoff bestehenden Schaltergehäuses 3 angeordnet und mit einem als Schlitten 4 ausgebildeten Bewegungselement verbunden. Der Schalter 1 hat ferner elektrische Anschlußteile 5 und eine Kontaktanordnung 6 zwischen dem Schlitten 4 und den elektrischen Anschlußteilen 5.

Zwischen dem Stößel 2 und dem Schlitten 4 des Schalters befindet sich eine Schalterjustierung in Form eines formschlüssigen Klinkengesperres, wobei der Stößel 2 an seinem gesamten oder nur an einem Teil seines Umfanges Verzahnungen 7, 8 aufweist zum Eingriff in Gegenverzahnungen 7a, 8a am Schlitten 4.

Der Stößel 2 kann zur Sicherung gegen Verdrehen gegenüber den Gegenverzahnungen 7a, 8a an einer oder beiden Längsseiten 11, 12 abgeflacht und durch eine in geeigneter Weise ebenfalls abgeflachte Durchführungsöffnung 13 an der Stirnwand 14 des Schlittens 4 hindurchgeführt sein.

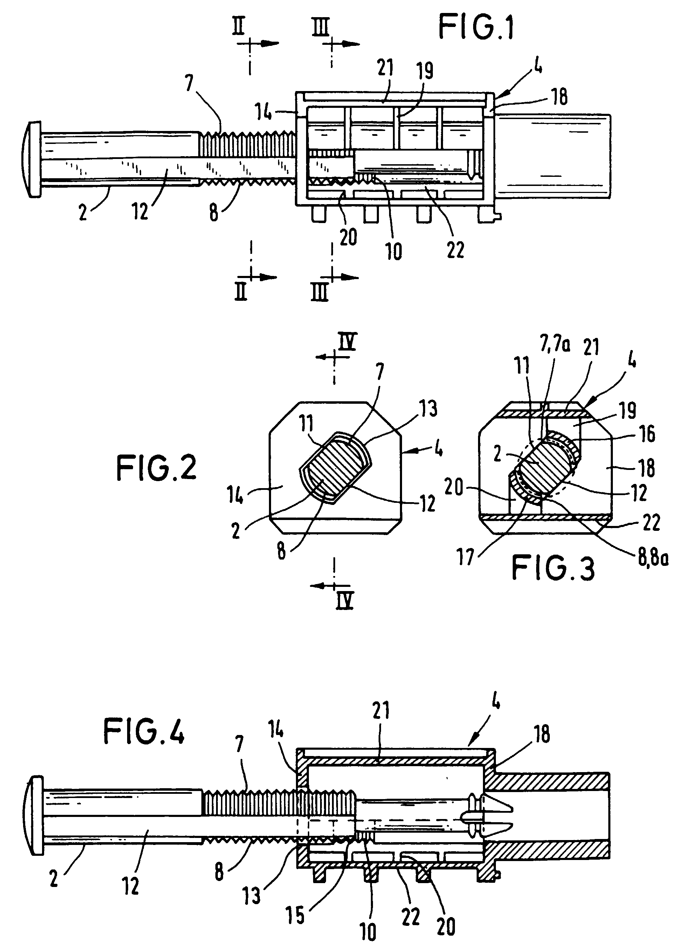

Wie insbesondere in Fig. 1, 3 und 4 im einzelnen zu erkennen ist, sind die Gegenverzahnungen 7a, 8a am Schlitten 4 ebenso wie die Verzahnungen 7, 8 am Stößel 2 als Mehrfachverzahnungen mit mehreren parallelen Zähnen 15 ausgebildet und in zwei sich beiderseits der Verzahnungen 7, 8 des Stößels 2 gegenüberliegenden, im Querschnitt als Viertelschalen geformten Führungsmulden 16, 17 angeordnet, die sich beiderseits des Stößels 2 zwischen den endseitigen Stirnwänden 14, 18 des Schlittens 4 parallel zueinander erstrecken. Die Verzahnungen 7, 8 am Stößel 2 und die Gegenverzahnungen 7a, 8a am Schlitten 4 sind an beiden Zahnflanken jeweils mit gleichem Steigungswinkel ausgebildet. Außerdem sind die Führungsmulden 16, 17 mit den Gegenverzahnungen jeweils über mehrere Querstege 19, 20 an dazu parallelen Längsseitenwandteilen 21, 22 des Schlittens 4 unter Bildung von Hohlprofilwandungen nur stellenweise abgestützt, so daß durch die damit verbundene Elastizität der Führungsmulden 16, 17 eine optimale Verrastung der Gegenverzahnungen 7a, 8a mit den Verzahnungen 7, 8 am Stößelschaft erreicht wird.

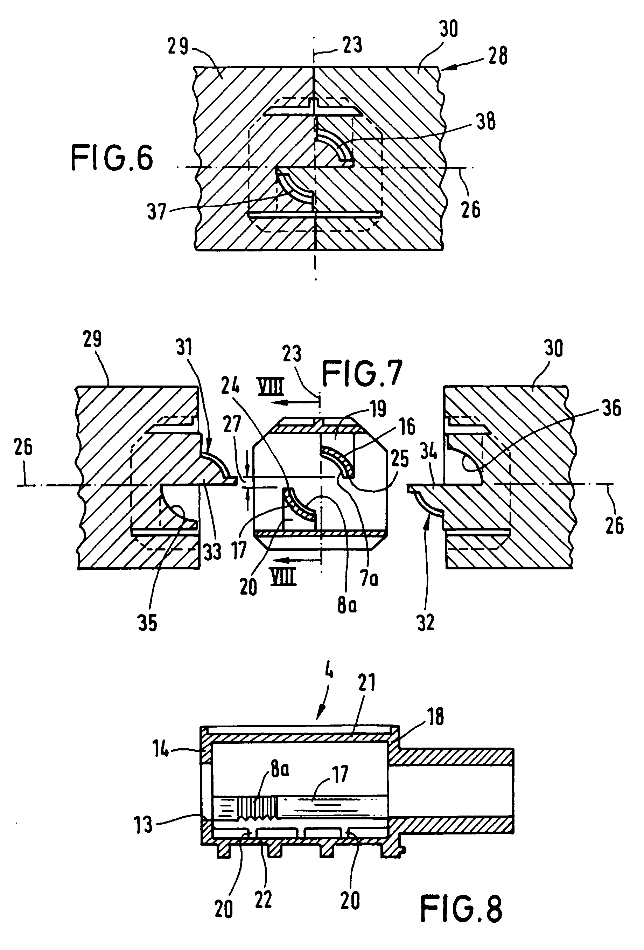

Wie insbesondere anhand der Darstellungen von Fig. 1 bis 4 und 6 bis 8 der Zeichnung zu erkennen ist, liegen die Führungsmulden 16, 17 mit den Gegenverzahnungen 7a, 8a für die Justierung des Stößels 2 gegenüber dem Schlitten 4 einander beiderseits einer durch den Schlitten 4 und den Stößelquerschnitt senkrecht verlaufenden Längsmittelebene 23 derart diagonal gegenüber, und ihre zu der Längsmittelebene 23 parallelen Längskanten 24, 25 sind in einer gegenüber der Längsmittelebene 23 um einen Winkel von 90° gedrehten horizontalen Mittelebene 26 in einem solchen Abstand 27 voneinander angeordnet, daß die einstückige Herstellung des Schlittens 4 durch ein zweiteiliges Spritzwerkzeug 28, wie es in Fig. 6 und 7 gezeigt ist, möglich ist.

Die beiden Formhälften 29, 30 des Spritzwerkzeuges 28 stoßen, wie in Fig. 6 und 7 im einzelnen zu erkennen ist, in der senkrechten Längsmittelebene 23 des Schlittens 4 derart aneinander, daß das formgebende Werkzeugteil 31 für die neben der senkrechten Längsmittelebene 23 an der oberen Führungsmulde 16 ausgebildete erste Gegenverzahnung 7a Bestandteil der gegenüberliegenden ersten Formhälfte 29 und das formgebende Werkzeugteil 32 für die neben der senkrechten Längsmittelebene 23 an der unteren Führungsmulde 17 ausgebildete zweite Gegenverzahnung 8a Bestandteil der gegenüberliegenden zweiten Formhälfte 30 ist.

Von jeder der beiden Formhälften 29, 30 stehen seitliche Formstege 33, 34 über die senkrechte Trennebene (Längsmittelebene 23) zwischen den Formhälften 29, 30 hervor, die an Gleitflächen aneinanderliegen, die ihrerseits in der horizontalen Mittelebene 26 zwischen den beiden Formhälften 29, 30 verlaufen.

Außerdem greifen die seitlichen Formstege 33, 34 bei geschlossenem Spritzwerkzeug in jeweils eine gegenüberliegende längsseitige Formmulde 35, 36 an der zugehörigen anderen Formhälfte 29 bzw. 30 ein, wobei die Formmulden 35, 36 und die Formstege 33, 34 an den beiden Formhälften 29, 30 so ausgeformt sind, daß sie bei geschlossenem Spritzwerkzeug 28 jeweils eine für die Ausbildung der Führungsmulden 16, 17 mit den Gegenverzahnungen 7a, 8a an dem Schlitten 4 geeignete Einspritzkammer 37, 38 zwischen sich freilassen.

### Liste der Bezugszeichen

- 1: Stößelschalter
- 2: Stößel
- 3: Schaltergehäuse
- 4: Schlitten
- 5: Anschlußteile
- 6: Kontaktanordnung
- 7: Verzahnung
- 7a: Gegenverzahnung
- 8: Verzahnung
- 8a: Gegenverzahnung
- 11: Längsseite
- 12: Längsseite
- 13: Durchführungsöffnung
- 14: Stirnwand
- 15: Zähne
- 16: Führungsmulde
- 17: Führungsmulde
- 18: Stirnwand
- 19: Querstege
- 20: Querstege
- 21: Längsseitenwandteil
- 22: Längsseitenwandteil
- 23: Längsmittelebene
- 24: Längskante
- 25: Längskante
- 26: Mittelebene
- 27: Abstand
- 28: Spritzwerkzeug
- 29: Formhälfte
- 30: Formhälfte
- 31: Werkzeugteil
- 32: Werkzeugteil
- 33: Formsteg
- 34: Formsteg
- 35: Formmulde
- 36: Formmulde
- 37: Einspritzkammer
- 38: Einspritzkammer

## Patentansprüche

1. Stößelschalter, insbesondere Bremslichtschalter, mit einem innerhalb eines Gehäuses (3) aus Kunststoff angeordneten Stößel (2), der mit einem als Schlitten (4) ausgebildeten Bewegungselement verbunden ist, mit elektrischen Anschlußteilen (5) und einer Kontaktanordnung (6) zwischen dem Schlitten (4) und den elektrischen Anschlußteilen (5) des Schalters und mit einer Schalterjustierung in Form eines formschlüssigen Klinkengesperres zwischen Stößel (2) und Schlitten (4), wobei der Stößel (2) an seinem Umfang Verzahnungen (7, 8) aufweist zum Eingriff in Gegenverzahnungen (7a, 8a) am Schlitten (4), **dadurch gekennzeichnet,** daß die Gegenverzahnungen (7a, 8a) am Schlitten (4) ebenso wie die Verzahnungen (7, 8) am Stößel (2) als Mehrfachverzahnungen ausgebildet und an der Innenseite von zwei sich beiderseits der Verzahnungen (7, 8) des Stößels (2) gegenüberliegenden, im Querschnitt als Viertelschalen geformten Führungsmulden (16, 17) angeordnet sind, die sich zwischen endseitigen Stirnwänden (14, 18) des Schlittens (4) parallel zueinander erstrecken.

2. Stößelschalter nach Anspruch 1, **dadurch gekennzeichnet,** daß die Verzahnungen (7, 8) am Stößel (2) und die Gegenverzahnungen (7a, 8a) am Schlitten (4) an beiden Zahnflanken jeweils mit gleichem Steigungswinkel ausgebildet sind.

3. Stößelschalter nach Anspruch 1 oder 2, **dadurch gekennzeichnet**, daß die die Gegenverzahnungen (7a, 8a) aufweisenden Führungsmulden (16, 17) über mehrere Querstege (19, 20) an dazu parallelen Längsseitenwandteilen (21, 22) des Schlittens (4) unter Bildung von Hohlprofilwandungen nur stellenweise abgestützt sind.

4. Stößelschalter nach Anspruch 1, **dadurch gekennzeichnet**, daß die Führungsmulden (16, 17) beiderseits einer durch den Schlitten (4) und den Stößelquerschnitt senkrecht verlaufenden Längsmittelebene (23) einander diagonal gegenüberliegen und ihre zu der Längsmittelebene (23) parallelen Längskanten (24, 25) in einer gegenüber der Längsmittelebene (23) um einen Winkel von 90° gedrehten horizontalen Mittelebene (26) in einem parallelen Abstand (27) voneinander angeordnet sind.

5. Verfahren zum einstückigen Herstellen des Schlittens für einen Stößelschalter nach den Ansprüchen 1 und 4 aus Kunststoff mit einem Spritzwerkzeug, wobei die Herstellung des Schlittens (4) durch ein zweiteiliges Spritzwerkzeug (28) erfolgt, dessen beide Formhälften (29, 30) in der senkrechten Längsmittelebene (23) des Schlittens (4) aneinanderstoßen und so geformt sind, daß das formgebende Werkzeugteil (31) für eine neben der senkrechten Längsmittelebene (23) an der oberen Führungsmulde (16) ausgebildete erste Gegenverzahnung (7a) Bestandteil der gegenüberliegenden ersten Formhälfte (29) und das formgebende Werkzeugteil (32) für die neben der senkrechten Längsmittelebene (23) an der unteren Führungsmulde (17) ausgebildete zweite Gegenverzahnung (8a) Bestandteil der gegenüberliegenden zweiten Formnälfte (30) ist.

6. Verfahren nach Anspruch 5, **dadurch gekennzeichnet,** daß die beiden Formhälften (29, 30) des Spritzwerkzeuges (28) zum einstückigen Herstellen des Schlittens (4) so ausgebildet sind, daß von jeder der beiden Formnälften (29, 30) über die senkrechte Trennebene zwischen den Formhälften seitlich hervorstehende Formstege (33, 34) an in der horizontalen Mittelebene (26) zwischen den beiden Formhälften verlaufenden Gleitflächen aneinanderliegen und bei geschlossenem Spritzwerkzeug (28) in jeweils gegenüberliegende längsseitige Formmulden (35, 36) an der zugehörigen anderen Formhälfte (29 bzw. 30) eingreifen, wobei die Formmulden (35, 36) und die Formstege (33, 34) an den beiden Formnälften (29, 30) so ausgeformt sind, daß sie bei geschlossenem Spritzwerkzeug (28) jeweils eine für die Ausbildung der Führungsmulden (16, 17) mit den Gegenverzahnungen (7a, 8a) an dem Schlitten (4) geeignete Einspritzkammer (37, 38) zwischen sich freilassen.

## Claims

1. Plunger-operated switch, particularly brake light switch, with a plunger (2), disposed within a plastics housing (3), which is coupled to a motion element formed as a slide block (4), with electrical connection parts (5) and a contact arrangement (6) between the slide block (4) and the electrical connection parts (5) of the switch and with a switch adjustment means in the form of a positive ratchet locking mechanism between the plunger (2) and the slide block (4), the plunger (2) having toothings (7, 8) on its circumference for the purpose of engagement in counter-toothings (7a, 8a) on the slide block (4), characterized in that both the counter-toothings (7a, 8a) on the slide block (4) and the toothings (7, 8) on the plunger (2) are fashioned as multiple toothings and are disposed on the inside of two guide troughs (16, 17) disposed opposite each other on both sides of toothings (7, 8) of the plunger (2), having the form of quarter-shells in cross section and extending in parallel to each other between end walls (14, 18) of the slide block (4).

2. Plunger-operated switch according to Claim 1, characterized in that the toothings (7, 8) on the plunger (2) and the counter-toothings (7a, 8a) on the slide block (4) are each formed with the same angle of inclination on both tooth flanks.

3. Plunger-operated switch according to Claim 1 or 2, characterized in that the guide troughs (16, 17) with the counter-toothings (7a, 8a) are supported only in certain places, by means of several cross webs (19, 20), on longitudinal side wall sections (21, 22) of the slide block (4) which are parallel to the guide troughs, through the formation of hollow section walls.

4. Plunger-operated switch according to Claim 1, characterized in that the guide troughs (16, 17) are disposed diagonally opposite one another, on both sides of a longitudinal central plane (23) running perpendicularly through the slide block (4) and the plunger cross section, and their longitudinal edges (24, 25) parallel to the longitudinal central plane (23) are disposed at a parallel distance (27) from each other in a horizontal central plane (26) rotated by an angle of 90° relative to the longitudinal central plane (23).

5. Method for the integral production of the slide block for a plunger-operated switch according to Claims 1 and 4 from plastics by means of an injection moulding die, the slide block (4) being produced by means of a two-part injection moulding die (28) whose two die halves (29, 30) abut on one another in the perpendicular longitudinal central plane (23) of the slide block (4) and are formed so that the shaping die part (31) for a first counter-toothing (7a) fashioned adjacent to the perpendicular longitudinal central plane (23) on the upper guide trough (16) is a component of the opposing first die half (29) and the shaping die part (32) for the second counter-toothing (8a) fashioned adjacent to the perpendicular longitudinal central plane (23) on the lower guide trough (17) is a component of the opposing second die half (30).

6. Method according to Claim 5, characterized in that the two die halves (29, 30) of the injection moulding die (28) for the integral production of the slide block (4) are formed so that die webs (33, 34), which project laterally from each of the two die halves (29, 30) over the perpendicular parting plane between the die halves bear on one another on slide faces running in the horizontal central plane (26) between the two die halves and each engage in opposing longitudinal die troughs (35, 36) on the other associated die half (29 or 30) when the injection moulding die (28) is closed, the die troughs (35, 36) and the die webs (33, 34) on the two die halves (29, 30) being formed so that, when the injection moulding die (28) is closed, they each leave between them an injection moulding cavity (37, 38) suitable for the formation of the guide troughs (16, 17) with the counter-toothings (7a, 8a) on the slide block (4).

## Revendications

1. Interrupteur à poussoir, en particulier interrupteur de feu-stop, comportant un poussoir (2) placé à l'intérieur d'un boîtier en plastique (3) et joint à un élément mobile constitué d'un coulisseau (4), des bornes électriques (5) et un dispositif de contact (6) placé entre le coulisseau (4) et les bornes électriques (5) de l'interrupteur, et un dispositif de réglage de l'interrupteur formé d'un dispositif d'arrêt à encliquetage situé entre le poussoir (2) et le coulisseau (4), le poussoir (2) présentant sur son pourtour des dentures (7, 8) destinées à venir en prise avec des contre-dentures (7a, 8a) faites sur le coulisseau (4), caractérisé par le fait que les contre-dentures (7a, 8a) du coulisseau (4), comme les dentures (7, 8) du poussoir (2), sont des dentures multiples (7a, 8a) et sont situées sur la face intérieure de deux auges de guidage (16, 17) à section transversale en forme de quart de coquille se faisant face des deux côtés des dentures (7, 8) du poussoir (2) et s'étendant parallèlement entre des parois frontales d'extrémité (14, 18) du coulisseau (4).

2. Interrupteur à poussoir selon la revendication 1, caractérisé par le fait que les deux flancs des dents des dentures (7, 8) du poussoir (2) et des contre-dentures (7a, 8a) du coulisseau ont le même angle d'inclinaison.

3. Interrupteur à poussoir selon l'une des revendications 1 et 2, caractérisé par le fait que les auges de guidage (16, 17) présentant les contre-dentures (7a, 8a) sont supportées seulement par endroits, par l'intermédiaire de plusieurs entretoises (19, 20), par des parties de paroi latérales longitudinales (21, 22) du coulisseau (4) en formant des parois à profil creux.

4. Interrupteur à poussoir selon la revendication 1, caractérisé par le fait que les auges de guidage (16, 17) sont placées diagonalement opposées de part- et d'autre d'un plan médian longitudinal (23) traversant verticalement le coulisseau (4) et la section du poussoir et que leurs bords longitudinaux (24, 25) parallèles au plan médian longitudinal (23) sont placés à une distance constante (27) l'un de l'autre dans un plan médian horizontal (26) perpendiculaire au plan médian longitudinal (23).

5. Procédé de fabrication d'une seule pièce en plastique, avec un moule d'injection, du coulisseau d'un interrupteur à poussoir selon les revendications 1 et 4, dans lequel le coulisseau (4) est fabriqué au moyen d'un moule d'injection en deux parties (28) dont les deux moitiés (29, 30) se touchent dans le plan médian longitudinal vertical (23) du coulisseau (4) et sont faites de façon que la partie de moule (31) qui façonne une première contre-denture (7a) faite sur l'auge de guidage supérieure (16) près du plan médian longitudinal vertical (23) fasse partie de la première moitié de moule opposée (29) et la partie de moule (32) qui façonne la deuxième contre-denture (8a) faite sur l'auge de guidage inférieure (17) près du plan médian longitudinal vertical (23) fasse partie de la deuxième moitié de moule opposée (30).

6. Procédé selon la revendication 5, caractérisé par le fait que les deux moitiés (29, 30) du moule d'injection (28) pour la fabrication d'une seule pièce du coulisseau (4) sont faites de façon que des nervures de moulage (33, 34) saillant latéralement de chacune des deux moitiés de moule (29, 30) au-delà du plan de séparation vertical entre celles-ci s'appuient l'une sur l'autre par des surfaces de glissement s'étendant dans le plan médian horizontal (26) entre les deux moitiés de moule et, lorsque le moule d'injection (28) est fermé, soient engagées chacune dans une auge latérale longitudinale de moulage opposée (35, 36) faite dans l'autre moitié de moule associée (29 ou 30), ces auges de moulage (35, 36) et les nervures de moulage (33, 34) étant faites sur les deux moitiés de moule (29, 30) de façon, lorsque le moule d'injection (28) est fermé, à laisser entre elles une chambre d'injection (37, 38) appropriée à la formation sur le coulisseau (4) des auges de guidage (16, 17) avec les contre-dentures (7a, 8a).
